# EUROPEAN PATENT APPLICATION

(11) **EP 4 789 818 A1**
(43) Date of publication of application: **12.08.2026**
(21) Application number: 23955531.1
(22) Date of filing: 11.10.2023
(51) Int. Cl.: B25J 9/00, B25J 18/00

(54) **NON-POWERED WEIGHT COMPENSATION DEVICE**

(30) Priority: 10.10.2023 KR 20230134346
(71) Applicant: Cosmo Robotics Co., Ltd, Seoul 08380 (KR)
(72) Inventor: OH, Joo Young, Seongnam-si, Gyeonggi-do 13528 (KR)
(74) Representative: HGF
(86) International application number: PCT/KR2023/015559
(87) International publication number: WO 2025/079744

(57) **Abstract**

A weight compensation device includes a first link, a weight compensation module to which the first link is connected, and a second link connected to the weight compensation module rotatably around a first rotating shaft. The weight compensation module includes a first rotating member, a second rotating member and an actuator, and when a user makes a joint movement from an initial pose, the second link, the first rotating member and the second rotating member rotate in a sequential order in said direction to compress the actuator, and when the user returns to the initial pose, the actuator is restored to an original state and pushes the second rotating member, making a rotational force of the second link stronger.

## Description

### [Technical Field]

The present disclosure relates to a non-powered weight compensation device, and more particularly, to a device for compensating for the weight felt by a user when lifting an object by assisting the user's muscle strength using compressive force and restoring force without power.

### [Background Art]

Recently, with development of robotic technology, muscle assistive devices are being developed to assist users during tasks by aiding human activities. Most of the muscle assistive devices generate power using the rotation of motors.

For example, Korean Patent Publication No. 10-2019-0004854 discloses a wearable device and a method for controlling the same. In Korean Patent Publication No. 10-2019-0004854, a weight compensation device includes a main body to support a wearer's upper body, a plurality of leg pulleys disposed on each of two sides of the main body, and a plurality of wire portions respectively connected to the leg pulleys, and provides a tensile force to the plurality of wire portions to provide a driving force to rotate each of the plurality of leg pulleys.

To replace human joints, the device includes a battery, a speed reducer for reducing the number of revolutions of the motor and a pulley, and these components increase the weight of the device, so the user has to support a considerable weight during tasks or activities.

### [Disclosure]

### [Technical Problem]

The present disclosure provides a weight compensation device for compensating for the weight felt by a user when lifting a heavy object up or down by assisting the user's muscle strength without using a power source such as a motor.

### [Technical Solution]

To achieve the above-described objective, according to an aspect of the present disclosure, provided is a weight compensation device including a first link, a weight compensation module to which the first link is connected, and a second link connected to the weight compensation module rotatably around a first rotating shaft, wherein the weight compensation module includes a first rotating member connected to the first rotating shaft of the second link, the first rotating member configured to rotate together with the first rotating shaft, a second rotating member configured to rotate around a second rotating shaft, the second rotating member connected to the first rotating member, and an actuator connected to the second rotating member, the actuator configured to be compressed by a rotation of the second rotating member in a direction, wherein when a user makes a joint movement from an initial pose, the second link, the first rotating member and the second rotating member rotate in a sequential order in said direction to compress the actuator, and wherein when the user returns to the initial pose, the second link rotates in an opposite direction, a compressive force acting on the actuator is removed, and the actuator is restored to an original state and pushes the second rotating member, making a rotational force of the second link stronger.

According to an embodiment, the first rotating member has a contact surface having a predetermined curvature, and the second rotating member is connected to the first rotating member while in contact with the contact surface.

According to an embodiment, the second rotating member includes a sliding member that slides on the contact surface.

According to an embodiment, the first rotating member has a plurality of contact surfaces having different curvatures, the sliding member is configured to move and touch one of the plurality of contact surfaces, and a compression length of the actuator when the first rotating member is fully rotated in said direction changes depending on the curvature of the contact surface that the sliding member contacts.

According to an embodiment, the sliding member is a roller that rolls along the contact surface.

According to an embodiment, the second link is connected to the first rotating member, and rotates together with the first rotating member by gear engagement, the second link freely rotates relative to the first rotating member by gear disengagement, and the free rotation of the second link relative to the first rotating member by the gear disengagement facilitates angle adjustment of the second link with respect to the weight compensation module from an initial position.

According to an embodiment, the second link is configured to move in a length direction of the first rotating shaft, and the movement of the second link in the length direction of the first rotating shaft causes gear disengagement.

According to an embodiment, the actuator is configured to rotate around a third rotating shaft, and the rotation of the actuator around the third rotating shaft causes disconnection of the second rotating member and the actuator.

### [Brief Description of the Drawings]

FIG. 1 is a perspective view of a weight compensation device according to an embodiment.
FIG. 2 is a diagram illustrating the weight compensation device of FIG. 1 when it is worn.
FIG. 3 is a diagram illustrating the weight compensation device of FIG. 1 when it is worn.
FIG. 4 is a perspective view of a weight compensation module of the weight compensation device of FIG. 1.
FIG. 5 is a perspective view of the weight compensation module of the weight compensation device of FIG. 1.
FIG. 6 is a side view of the weight compensation module of the weight compensation device of FIG. 1.
FIG. 7 is a diagram illustrating a muscle strength assisting structure of the weight compensation module of FIG. 4.
FIG. 8 is a diagram illustrating a structure for adjusting the muscle strength assisting force of the weight compensation module of FIG. 4.
FIG. 9 is a diagram illustrating a structure for removing the muscle strength assisting force of the weight compensation module of FIG. 4.
FIG. 10 is a diagram illustrating the angle adjustment structure of the weight compensation module of FIG. 4.

### [Mode for Invention]

Hereinafter, exemplary embodiments of the present disclosure will be described with reference to the accompanying drawings. Although the present disclosure is described with reference to the embodiments shown in the drawings, this is described as an embodiment, and the technical aspects of the present disclosure and the key components and their operation are not limited thereto.

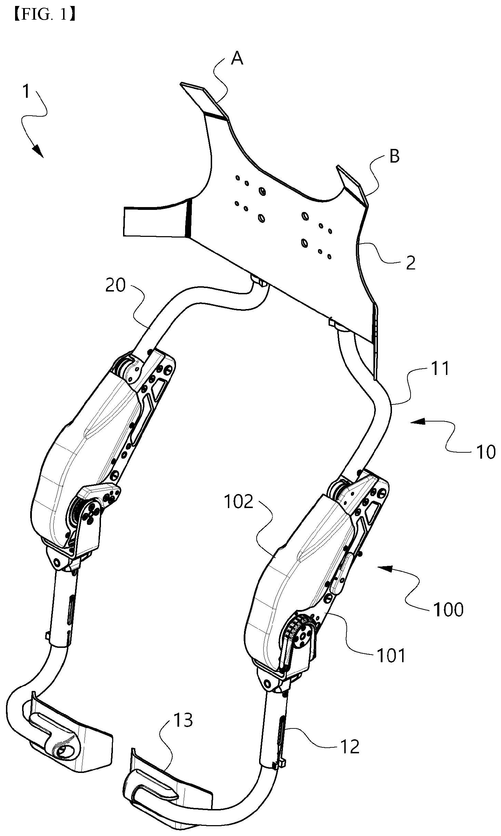

FIG. 1 is a perspective view of a weight compensation device 1 according to an embodiment.

The weight compensation device 1 according to this embodiment includes a back frame 2, and two leg portions 10, 20 extending from the bottom of the back frame 2. The two leg portions 10, 20 are mirror symmetric with respect to the back frame 2, and only the leg portion 10 will be described herein, and the description of the other leg portion 20 is omitted.

The leg portion 10 includes a first link 11 with one end portion connected to the back frame 2, a weight compensation module 100 to which the other end portion of the first link 11 is connected, and a second link 12 rotatably connected to the weight compensation module 100.

The term "connected" as used herein is intended to include a state in which two elements joined directly or indirectly through another element are substantially coupled and fixed in a way that disallows them to move relative to each other, and a state in which they are coupled and fixed in a way that allows them to move relative to each other.

One end portion of the first link 11 is connected to the back frame 2 through a hinge portion, and is bent outward from the back frame 2. The weight compensation module 100 is connected to the other end portion of the first link 11. The first link 11 and the weight compensation module 100 are connected by a connection portion 170 including a spring having very high rigidity. In the event that the weight compensation device 1 does not properly operate due to a failure or defect in the weight compensation module 100, there is a risk of injury when a user moves his/her joint beyond normal limit. Accordingly, when a large force is applied to the connection portion 170, relative rotation between the first link 11 and the weight compensation module 100 may be made. However, the connection portion 170 may disconnect in case of emergency, and under the allowable strength of the spring in the connection portion 170, the first link 11 and the weight compensation module 100 may be substantially in the fixed state.

One end portion of the second link 11 is rotatably connected to the weight compensation module 100. The other end portion of the second link 11 is bent inward. A support 13 is connected to the inwardly bent end portion of the second link 11.

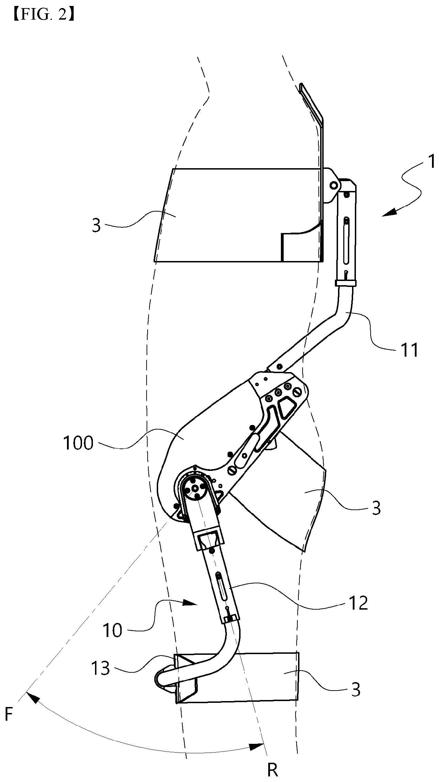

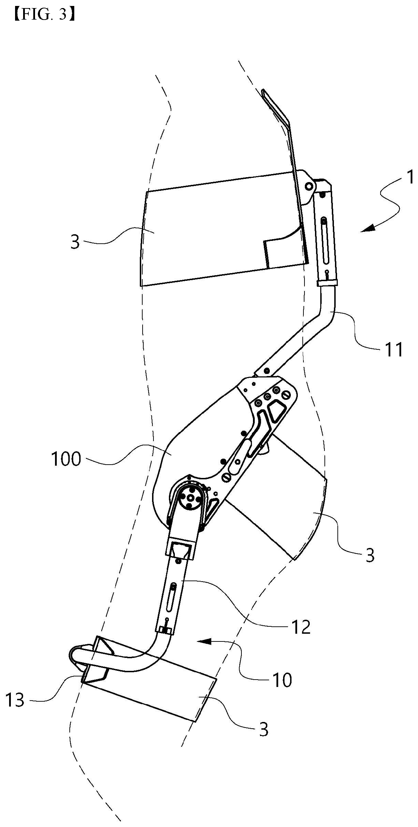

FIGS. 2 and 3 are diagrams showing the weight compensation device 1 worn on the user.

The weight compensation device 1 according to this embodiment is worn on the user's leg part to compensate for the weight felt by the user by reducing the required muscle strength, for example, when the user sits down, or bends his/her legs to pick up an object and stands up bringing the object up.

As shown in FIG. 2, when the user is in standing position, the back frame 2 contacts and supports the user's back. A harness 3 is coupled to the back frame 2, and holds the user's abdomen to fix the back frame 2 to the user's torso.

The first link 11 extends such that the weight compensation module 100 is approximately disposed diagonally across the outer side of the user's hip joint. The weight compensation module 100 is located on the outer side of the thigh of the human body to assist forward and backward rotation of the leg on the outer side of the thigh of the human body.

The second link 12 extends such that the support 13 is located immediately on the user's knee to support the front part of the thigh. The support 13 is connected to the second link 12 and naturally rotates around the second link 12 (in the clockwise or counterclockwise direction when viewed from FIG. 2) in response to the user's movement.

The harness 3 is coupled to the weight compensation module 100, and holds the user's hip part to fix the weight compensation module 110 to the user's body. The harness 3 connected to the weight compensation module 100 may be separately coupled to the weight compensation module 100 of each of the two leg portions 10, 20, or one harness 3 may be coupled across the weight compensation modules of the two leg portions 10, 20 and wrapped around the user's hip.

The harness 3 is also coupled to the support 12, and holds the user's thigh part to fix the end portion of the second link 12 to the user's leg.

As shown in FIG. 2, when the human body is in standing position, no or little load is applied to the waist and knee joints. However, when lifting an object up or down, the waist and knees of the human body support the majority of load.

FIG. 3 shows that the user sits down or bends over using his/her knees and waist.

As shown in FIG. 3, when the user makes a knee bending motion, the thigh rotates around the hip joint in the clockwise direction in FIG. 3 due to the structure of the human body. Accordingly, the second link 12 rotates around the weight compensation module 100 in the clockwise direction in FIG. 3.

According to this embodiment, as the second link 12 rotates, compressive force and restoring force by the weight compensation module 100 reduce the load applied to the waist and knee joints.

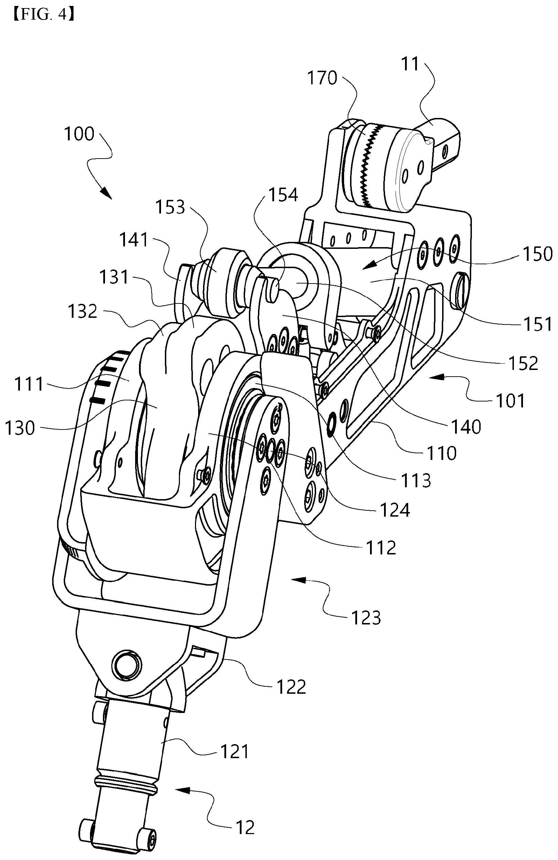

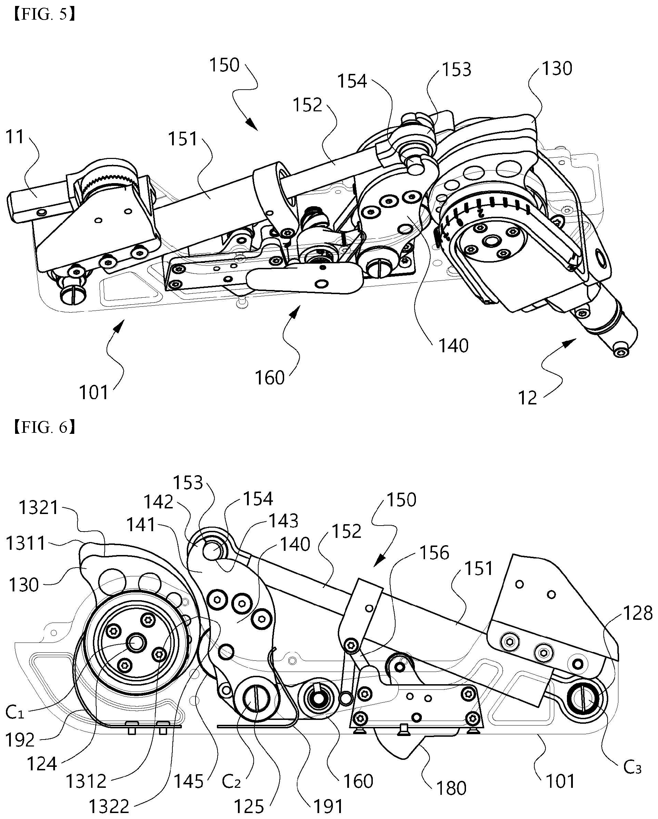

FIGS. 4 and FIGS. 5 are perspective views showing the weight compensation module 100 when viewed from different angles, and FIG. 6 is a side view of the weight compensation module 100.

The weight compensation module 100 includes a body portion 101 and a cover portion 102 (see FIG. 1) covering the inner parts of the body portion 101. For convenience of description and illustration, in FIG. 4 and subsequent drawings, the cover portion 102 of the weight compensation module 100 is removed.

As shown in FIGS. 4 to 6, the body portion 101 of the weight compensation module 100 includes a frame 110, a first rotating member 130, a second rotating member 140 and an actuator 150.

In this specification, for convenience of description, a side where the second link 12 is located is referred to as "front" and a side where the first link 11 is located is referred to as "rear".

The first rotating member 130, the second rotating member 140 and the actuator 150 are arranged within the internal space of the frame 110 in a sequential order from front to rear.

Fixed portions 111, 112 are formed on the front side of the frame 110 to form an area for connecting the second link 12, and the first rotating member 130 is disposed in a space between the fixed portions 111, 112.

A U-shaped socket 123 is formed at the end portion of the second link 12, and is disposed around the outside of the two fixed portions 111, 112. A first rotating shaft 124 is formed across the U-shaped socket 123, and is connected to the frame 110 with a bearing 113 through the two fixed portions 111, 112. The first rotating shaft 124 of the second link 12 extends in a first rotation center axis C1 direction, and accordingly, the first rotating shaft 124 of the second link 12 is rotatable around the first rotation center axis C1 with respect to the frame 110.

A U-shaped socket 122 is formed in front of the U-shaped socket 123 of the second link 12, and a body portion 121 of the second link 12 is rotatably connected to the U-shaped socket 122. The rotational direction with respect to the U-shaped socket 122 is perpendicular to the rotational direction with respect to the U-shaped socket 123. Accordingly, the second link 12 has two degrees of freedom of rotational direction with respect to the weight compensation module 100, thereby ensuring the degree of freedom of joint movement when the user makes a sitting motion.

The first rotating member 130 is connected to the first rotating shaft 124 of the second link 12, and rotates around the first rotation center axis C1 together with the first rotating shaft 124.

The second rotating member 140 is connected to the frame 110 rotatably around a second rotation center axis C2 by a second rotating shaft 125 disposed at the rear of the first rotating shaft 124. According to this embodiment, the first rotation center axis C1 and the second rotation center axis C2 are parallel to each other.

The second rotating member 140 is kept in contact with the first rotating member 130 by a counterclockwise bias in FIG. 6 by a spring member 191.

The actuator 150 is connected to the second rotating member 140. The actuator 150 according to this embodiment is, for example, a pneumatic cylinder type actuator including a cylinder member 151 and a rod 152 inserted into the cylinder member 151. In the actuator 150, when the rod 152 is pushed into the cylinder member 151, air inside the cylinder member 151 is compressed and a compressive force is stored, and when the force that pushes the rod 152 inward is removed, a restoring force that pushes the rod 152 outward by air pressure is provided. According to this embodiment, although a pneumatic cylinder is taken as an example of the actuator, the actuator is not limited thereto. The actuator may include any other type of actuator, for example, a hydraulic cylinder, and any device that stores the compressive force when compressed and provides the restoring force may be adopted as the actuator 150 according to this embodiment.

The first rotating member 130 has curved contact surfaces 131, 132 that curve rearward with a predetermined curvature. According to this embodiment, the first rotating member 130 has the plurality of contact surfaces 131, 132 having different curvatures. The two contact surfaces 131, 132 are arranged adjacent to each other in the length direction of the first rotation center axis C1.

The first contact surface 131 includes a first curved surface 1311 and a second curved surface 1312, and the first curved surface 1311 and the second curved surface 1312 form a single, connected curved surface. The second contact surface 132 includes a first curved surface 1321 and a second curved surface 1322, and the first curved surface 1321 and the second curved surface 1322 form a single, connected curved surface.

The second curved surface 1312 of the first contact surface 131 and the second curved surface 1322 of the second contact surface 132 are formed with the same curvature, and accordingly, the two second curved surfaces 1312, 1322 are substantially connected to each other without a step when viewed from the length direction of the first rotation center axis C1.

In contrast, the first curved surface 1311 of the first contact surface 131 and the first curved surface 1321 of the second contact surface 132 are formed with different curvatures, to form a step between the two contact surfaces 131, 132. As the first curved surface 1311 of the first contact surface 131 and the first curved surface 1321 of the second contact surface 132 have different curvatures, the entire first contact surface 131 and the entire second contact surface 132 are formed with different curvatures.

The second rotating member 130 includes a sliding member 145 that slides along the contact surface 131, 132 (any one of the contact surfaces 131, 132 when the plurality of contact surfaces 131, 132 are formed) while in contact with the contact surface 131, 132.

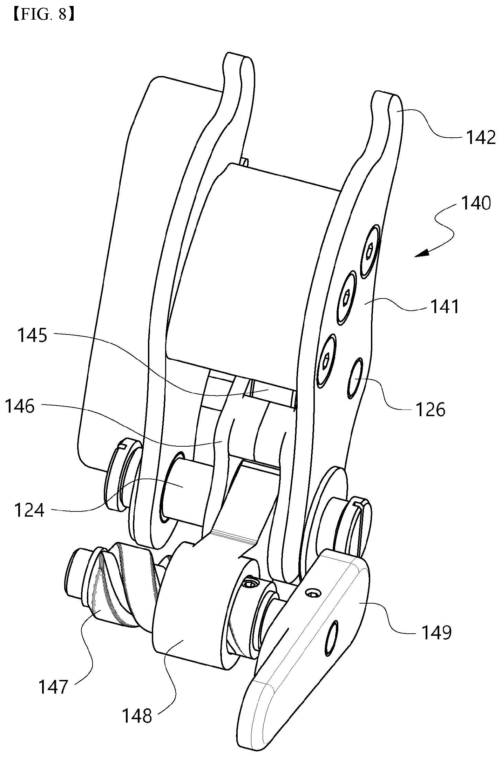

According to this embodiment, the sliding member 145 is a roller that rolls along the contact surface 131, 132 by free rotation around a fourth rotating shaft 126 (see FIG. 8) formed at a location different from the second rotating shaft 125. FIG. 6 shows the sliding member 145 in contact with the first contact surface 131.

As clearly shown in FIG. 4, the second rotating member 130 includes two side plates 141 spaced apart in the second rotation center axis C2 direction. According to this embodiment, the distance between the two side plates 141 is larger than the thickness of the first rotating member 130. The second rotating shaft 125 and the fourth rotating shaft 126 are connected across the two side plates 141 (see FIG. 8).

The two side plates 141 have a hook-shaped locking protrusion 142 at the ends to form a locking groove 143.

The rod 152 of the actuator 150 has a connector 153 at the end. The connector 153 has a locking rod 154 extending in the second rotation center axis C2 direction. As illustrated, two locking rods 154 are inserted into the locking grooves 143 formed in the two side plates 141, respectively.

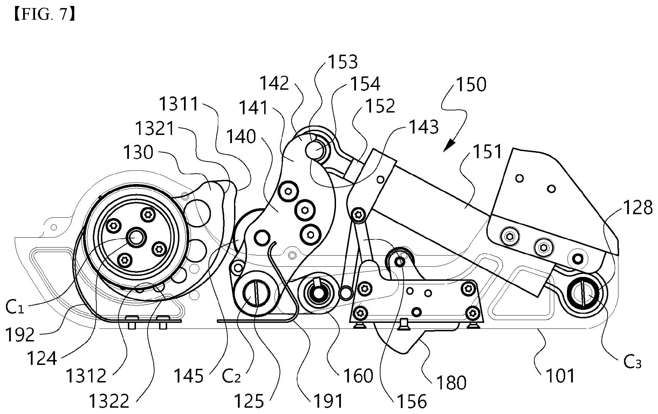

Hereinafter, the operation of the weight compensation module 100 will be described with reference to FIGS. 6 and 7. FIG. 6 shows the actuator 150 of the weight compensation module 100 in stretched (restored) state, and FIG. 7 shows the actuator 150 of the weight compensation module 100 in compressed state.

When the user moves the joint from the initial pose of FIG. 2 (the user's standing pose) to the sitting pose of FIG. 3, the second link 12 rotates around the first rotation center axis C1 in the clockwise direction when viewed from FIG. 6 by the thigh's movement. In this specification, the initial pose is described as the user's standing pose, but is not limited thereto. The 'initial pose' does not necessarily refer to a specific pose, and will be understood as a pose immediately before the start of compression of the actuator.

Accordingly, the first rotating member 130 connected to the first rotating shaft 124 of the second link 12 rotates around the first rotation center axis C1 together, and pushes the second rotating member 140 by the shape of the contact surface 131 that curves outward.

Accordingly, the second rotating member 140 rotates around the second rotation center axis C2, and the locking protrusion 142 that lies on a circle around the second rotation center axis C2 compresses the rod 152 by the movement along a circular path.

As shown in FIG. 6, the rear end portion of the actuator 150 is connected to the frame 110 by a third rotating shaft 128 that rotates around a third rotation center axis C3, and the actuator 150 is rotatable around the third rotation center axis C3 with respect to the frame 110.

As shown in FIG. 7, when the second rotating member 140 pushes the rod 152, the actuator 150 rotates around the third rotation center axis C3 in the clockwise direction, and the rod 152 is pushed into the cylinder member 151. Accordingly, the actuator 150 stores the compressive force.

That is, according to this embodiment, when the user moves the joint from the initial pose, the second link 12, the first rotating member 130 and the second rotating member 140 rotate in a sequential order in one direction to compress the actuator 150 which in turn, stores the compressive force.

In contrast, when the user stands up from the pose of FIG. 3 to the pose of FIG. 2, the second link 12 rotates in the opposite direction (counterclockwise), and accordingly, the force of the second link 12 that keeps the first rotating member 130 in the state shown in FIG. 7 is removed. Accordingly, when the constraint force acting on the first rotating member 130 and the second rotating member 140 is removed, the force that compresses the actuator 150 is removed, and the actuator 150 applies a returning force in a direction in which the rod 152 escapes from the cylinder member 151 by the restoring force exerted by air pressure.

Accordingly, the rod 152 pushes the second rotating member 140, and the second rotating member 140 pushes the first rotating member 130, making the rotational force of the second link 12 stronger. When the rod 152 of the actuator 150 escapes and returns, the actuator 150 is pulled toward the frame 110 by a coil spring 156 and returns to the initial position of FIG. 6.

According to this configuration, when the user (operator) bends over to lift the object, compressive force is generated in the actuator 150. The compressive force prevents the load on the waist and knee joints when the user makes a sitting motion. Furthermore, when the user makes a pickup motion, the restoring force of the compressor may help lift the object much more easily.

Furthermore, according to this embodiment, as the first rotating member 130 rotates by the rotation of the second link 12, and the second rotating member 140 rotates by the first rotating member 130, the actuator 150 may be compressed using a small force by the lever effect involving distributing applied forces.

Referring to FIG. 6, the weight compensation module 100 includes an assistive force adjustment mechanism 160. FIG. 8 is a diagram detailing the assistive force adjustment mechanism 160.

The assistive force adjustment mechanism 160 includes a first connector 146 connected across the second rotating shaft 125 and the fourth rotating shaft 126 and configured to move along the length direction of the second rotating shaft 125 and the fourth rotating shaft 126, a screw member 148 extending parallel to the second rotation center axis C2, and a second connector 146 connected across the second rotating shaft 125 and the screw member 148 and configured to move along the length direction of the second rotating shaft 125 and the screw member 148.

Two end portions of the first connector 146 are disposed around the outside of the sliding member 145 and the second connector 146, respectively.

When the user rotates a lever 149 connected to the screw member 148 and exposed to the outside of the frame 110, the screw member 148 rotates, and accordingly, the second connector 148 moves on the screw member 148 along the length direction of the screw member 148.

As the second connector 148 moves, the first connector 146 connected to the second connector 146 moves. The first connector 146 moves the sliding member 145 on the fourth rotating shaft 126. That is, the direction of movement of the sliding member 145 is the same as the direction of arrangement of the first contact surface 131 and the second contact surface 132.

As described above, the second curved surface 1312 of the first contact surface 131 and the second curved surface 1322 of the second contact surface 132 are substantially connected without a step when viewed from the length direction of the first rotation center axis C1 (the direction of movement of the sliding member 145). Accordingly, the sliding member 145 may freely move between the first contact surface 131 and the second contact surface 132 by the operation of the assistive force adjustment mechanism 160 in the state of FIG. 6.

As the sliding member 145 moves in the second rotation center axis C2 direction, selectively, the sliding member 145 may be disposed at a location of contact with one of the first contact surface 131 and the second contact surface 132.

In this embodiment, the curvature of the first curved surface 1311 of the first contact surface 131 is smaller than the curvature of the first curved surface 1321 of the second contact surface 132. Accordingly, in case where the weight compensation device 1 operates in a state that the sliding member 145 contacts the first contact surface 131, when the first rotating member 130 is fully rotated, the actuator 150 is compressed at a larger degree than that of the contrary case. That is, the compression length (degree) of the actuator changes depending on the curvature of the contact surface.

In other words, it signifies that the sliding member 145 may provide a larger restoring force when it contacts the first contact surface 131 than when it contacts the second contact surface 132.

When the user wants to receive muscle assistance with a larger restoring force in the same conditions, the assistive force adjustment mechanism 160 may enable the operation of the sliding member 145 in contact with the first contact surface 131.

The assistive force adjustment mechanism 160 may provide effective and efficient muscle assistance according to the user's muscle strength or working environment.

According to this embodiment, the first rotating member 130 has a structure in which two contact surfaces are formed for one member, but is not limited thereto. If necessary, three or more contact surfaces having different curvatures may be formed to adjust the muscle assistive force more elaborately.

According to this embodiment, the first rotating member 130 has a structure in which two contact surfaces are formed for one member, but is not limited thereto. The first rotating member 130 may be formed as a single rotating member by separately forming a member having the first contact surface 131 and a member having the second contact surface 132, and assembling the two members into one.

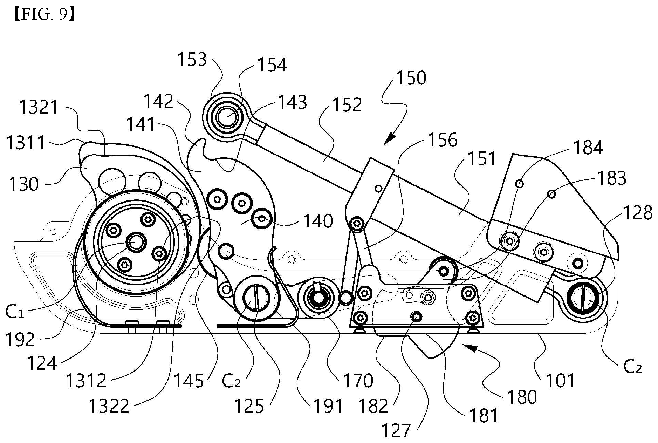

Additionally, referring to FIG. 6, the weight compensation module 100 includes an assistive force release mechanism 180. FIG. 9 is a diagram detailing the assistive force release mechanism 180.

As shown in FIG. 9, the assistive force release mechanism 180 includes a roughly triangular lever member that rotates around a fifth rotating shaft 127 formed in the frame 110. The lever member has approximately three feet.

In active state of assistive force, as shown in FIG. 6, the second foot 182 protrudes beyond the frame 110.

As shown in FIG. 9, to release the assistive force, when the second foot 182 is pressed into the frame 110, the lever member rotates, and the third foot 183 contacts the actuator 150, and with the movement toward the third rotating shaft 128 that is the hinge point of the actuator 150, the third foot 183 lifts the actuator 150. The third foot 183 has a roller 184 to reduce friction with the actuator 150. By the rotation of the lever member, the first foot 181 protrudes beyond the frame 110.

By this operation, as shown in FIG. 9, the locking rod 154 of the actuator 150 escapes from the locking groove 143. In this instance, when the actuator 150 is disconnected, the position of the second rotating member 140 is fixed by the operation of the spring 191, thereby ensuring the correct position of the second rotating member 140 when switching back to the connection state.

In this state, when the second link 12 rotates, the second rotating member 140 rotates, but the actuator 150 is not compressed, so the user may move freely without feeling the resistance of the actuator 150 when bending the knees. Accordingly, in situations or activities requiring no muscle assistance, the user may release the muscle assistance by pressing down the second foot 182 that protrudes beyond the frame 110. In situations where muscle assistance is needed again, in the initial standing pose, when the first foot 181 is pressed, the operation of the coil spring 156 drives the actuator 150 to move down and insert into the locking groove 143 into the connection state.

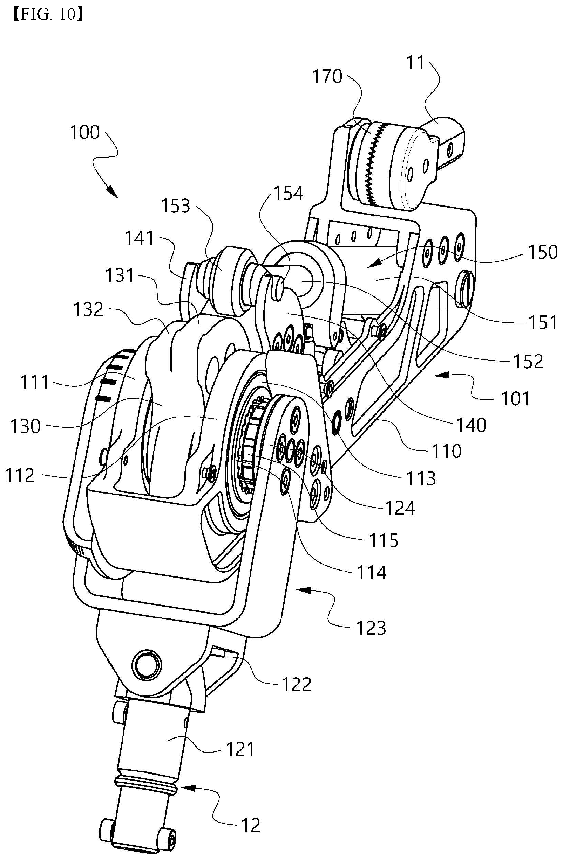

The weight compensation module 100 includes an angle adjustment mechanism. FIG. 10 is a diagram detailing the angle adjustment mechanism.

The first rotating member 130 has a gear portion 114 located at the fixed portions 111, 112, and the first rotating shaft 124 has a gear portion 115 that may be engaged with the gear portion 114.

In the active state shown in FIG. 4, the gear portion 114 of the first rotating member 130 is engaged with the gear portion 114 of the first rotating shaft 124 of the second link 12, and the gear engagement holds the first rotating member 130 and the second link 12 together, and causes the first rotating member 130 to rotate with the rotation of the second link 12 (the first rotating shaft 124).

Meanwhile, the second link 12 is configured to move in the length direction of the first rotating shaft 124. As shown in FIG. 10, when the second link 12 moves in one direction along the length of the first rotating shaft 124, the gear portion 114 and the gear portion 115 are disengaged from each other.

When the gears of the two gear portions 114, 115 are disengaged, the second link 12 may freely rotate relative to the first rotating member 130. In this instance, even in the gear disengaged state, by the spring 192 (see FIG. 6), the first rotating member 130 is fixed in place.

The free rotation of the second link 120 relative to the first rotating member 130 in the gear disengaged state of the two gear portions 114, 115 may facilitate the angle adjustment of the second link 120 relative to the weight compensation module 100 to the initial position.

When the user's body size or it is necessary to change the slightly bent pose in the knees to the initial pose, the angle of the second link 120 relative to the weight compensation module 100 may be adjusted to the initial position through the angle adjustment mechanism, thereby ensuring the desired initial position.

The weight compensation device 1 according to this embodiment may distribute the forces applied, thereby reducing fatigue when the user wears the device and makes a motion, and may freely adjust or release the assistive force, thereby efficiently responding to the type of task or the user's condition.

### [Industrial Applicability]

The weight compensation device according to the present disclosure may be used in the robot industry.

## Claims

1. A weight compensation device comprising:
a first link, a weight compensation module to which the first link is connected, and a second link connected to the weight compensation module rotatably around a first rotating shaft,
wherein the weight compensation module includes:
a first rotating member connected to the first rotating shaft of the second link, the first rotating member configured to rotate together with the first rotating shaft,
a second rotating member configured to rotate around a second rotating shaft, the second rotating member connected to the first rotating member, and
an actuator connected to the second rotating member, the actuator configured to be compressed by a rotation of the second rotating member in a direction,
wherein when a user makes a joint movement from an initial pose, the second link, the first rotating member and the second rotating member rotate in a sequential order in said direction to compress the actuator, and
wherein when the user returns to the initial pose, the second link rotates in an opposite direction, a compressive force acting on the actuator is removed, and the actuator is restored to an original state and pushes the second rotating member, making a rotational force of the second link stronger.

2. The weight compensation device according to claim 1,
wherein the first rotating member has a contact surface having a predetermined curvature, and
wherein the second rotating member is connected to the first rotating member while in contact with the contact surface.

3. The weight compensation device according to claim 2,
wherein the second rotating member includes a sliding member that slides on the contact surface.

4. The weight compensation device according to claim 3,
wherein the first rotating member has a plurality of contact surfaces having different curvatures,
wherein the sliding member is configured to move and touch one of the plurality of contact surfaces, and
wherein a compression length of the actuator when the first rotating member is fully rotated in said direction changes depending on the curvature of the contact surface that the sliding member contacts.

5. The weight compensation device according to claim 4,
wherein the sliding member is a roller that rolls along the contact surface.

6. The weight compensation device according to claim 1,
wherein the second link is connected to the first rotating member, and rotates together with the first rotating member by gear engagement,
wherein the second link freely rotates relative to the first rotating member by gear disengagement, and
wherein the free rotation of the second link relative to the first rotating member by the gear disengagement facilitates angle adjustment of the second link with respect to the weight compensation module from an initial position.

7. The weight compensation device according to claim 5,
wherein the second link is configured to move in a length direction of the first rotating shaft, and
wherein the movement of the second link in the length direction of the first rotating shaft causes gear disengagement.

8. The weight compensation device according to claim 1,
wherein the actuator is configured to rotate around a third rotating shaft, and
wherein the rotation of the actuator around the third rotating shaft causes disconnection of the second rotating member and the actuator.
